# EUROPEAN PATENT APPLICATION

(11) **EP 1 835 653 A1**
(43) Date of publication of application: **19.09.2007**
(21) Application number: 06711755.6
(22) Date of filing: 17.01.2006
(51) Int. Cl.: H04L 9/08

(54) **KEY STORAGE DEVICE, KEY STORAGE METHOD, AND PROGRAM**

(30) Priority: 21.01.2005 JP 2005014164
(71) Applicant: MITSUBISHI ELECTRIC CORPORATION, Chiyoda-ku Tokyo 100-8310 (JP)
(72) Inventor: ITO, Takashi c/o MITSUBISHI ELECTRIC CORPORATION, Chiyoda-ku, Tokyo 1008310 (JP); YONEDA, Takeshi c/o MITSUBISHI ELECTRIC CORPORATION, Chiyoda-ku, Tokyo 1008310 (JP); OHTA, Hidenori c/o MITSUBISHI ELECTRIC CORPORATION, Chiyoda-ku, Tokyo 1008310 (JP)
(74) Representative: Pfenning, Meinig & Partner GbR
(86) International application number: PCT/JP2006/300475
(87) International publication number: WO 2006/077803

(57) **Abstract**

In a system in which multiple sensor nodes is distributed and communication using an encryption key is carried out between the respective distributed nodes, a key necessary for communication is flexibly specified and stored for each node even if node arrangement is irregular or if multiple distribution methods are used in combination. An area dividing unit 611 divides a node distribution target space which is a target of node distribution into predetermined sub-spaces; a key generating unit 612 generates the same number of keys as the number of the sub-spaces; the sub-spaces and the keys are made corresponding and stored in a key pool memory region 613; an arrangement sampling unit 614 predicts an arranged point of each node based on a probability density function, selects one of the sub-spaces located within a communicable range from the predicted arranged point of each node, specifies the key assigned to the selected sub-space, and repeats the same process until a predetermined number of keys are specified for one node; and a key writing unit 615 writes the keys specified by the arrangement sampling unit 614 in the node.

## Description

### Technical Field

The present invention relates to storage technique of an initial key for secure communication to a plurality of sensor nodes of which an accurate installation location cannot be determined previously in a system for collecting environmental information and rescuing/assisting in a time of disaster such as measurement of temperature, detection of gas leak, finding a survivor, etc. using distributed sensor nodes.

### Background Art

In a sensor network configured by a large number of sensor nodes (simply referred to as nodes, hereinafter), it has been a problem to ensure security of communication between nodes. Because of this, encrypted communication is used employing an encryption key (simply referred to as a key, hereinafter) which has been previously stored in nodes.

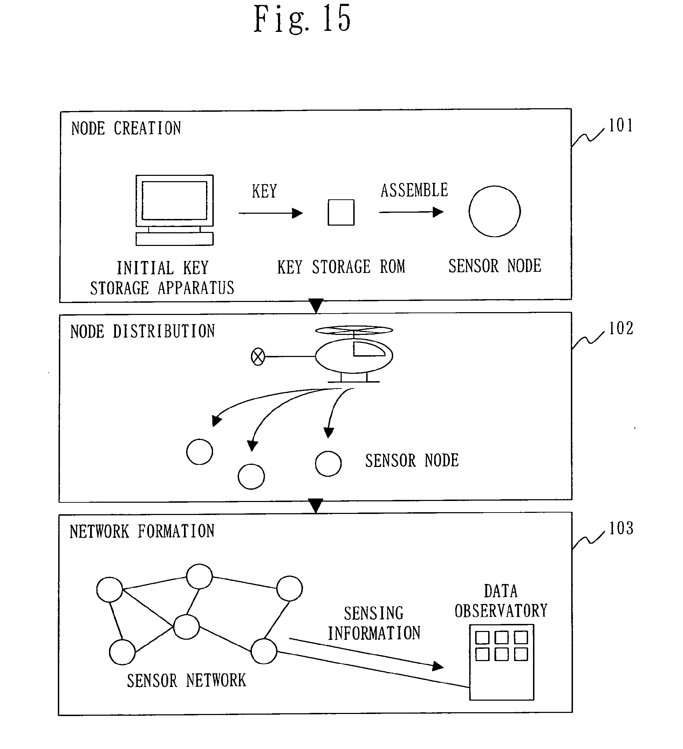

Fig. 15 is an imaginary drawing of a system in which a large number of nodes is distributed in a certain area for collecting sensing information by forming a network with the nodes.

In Fig. 15, keys are stored in each node at node creation 101, each node is distributed to an area which is distribution target at node distribution 102, and the nodes collect sensing information by forming a network using encrypted radio communication.

At the network formation 103, in order to carry out encrypted communication between two nodes which are within a radio-communicable range, it is necessary to previously store a common key in the two nodes. However, when nodes are distributed as in the present system, since positioning by distribution accompanies an error, it is not previously determined which node-pair is arranged within the radio-communicable range. Accordingly, regardless of how the node arrangement is done as a result of the node distribution 102, a method for the node creation 101 has been a problem to enable to do the network formation 103.

One of simple methods to store a key at the node creation 101 is to store a common key in all nodes; however, this method has a problem that security of the system is totally lost if one node is stolen and the key is compromised. By another method, a separate common key shared with each of the other nodes is stored individually; however, in this method, each node needs to have memory region proportional to the total number of nodes, so that there is a problem that it is difficult to implement this method in the sensor network in which resource is limited, and there is another problem that it is hard to add nodes.

As an art to solve the problems, Non-Patent Document 1 describes a method in which multiple keys selected at random from a keypool with a large number of keys are stored in each node to enable probabilistic key establishment between arbitrary nodes, which simultaneously balances resource-saving and resistance to key compromise caused by a stolen node. Further, as an improved method of the above, Non-Patent Document 2 uses approximate location information of the nodes when storing an initial key, which improves resource-saving and resistance to key compromise.

Fig. 16 is a block diagram showing a configuration example of an initial key storage apparatus used in the method described in Non-Patent Document 2. A key pool memory region 212 is data memory means to previously store all the keys which can be stored in nodes. Further, an area key pool memory region 214 is data memory means for storing correspondence of each area to a subset of a whole set of keys (a set of keys stored in the key pool memory region 212). Fig. 17 shows an example of data to be stored in the key pool memory region 212, and Fig. 18 shows an example of data stored in the area key pool memory region 214. Fig. 19 is a flowchart for explaining an initial key storing process using the above.

The above method defines a key set (an area key pool) for each node distribution area which is previously divided, at an area key pool decision (step S513), and at a key storage phase (step S502), key selection is done from the area key pool corresponding to the distribution area. By devising so that a common key should be included with high probability among adjacent areas, it is highly possible to establish a key between the nodes distributed in the same area or the adjacent area.

Further, JP2004-248167 discloses technique related to security communication between nodes.
Patent Document 1: JP2004-248167
Non-Patent Document 1: Eschenauer and V. D. Gligor, "A Key-Management Scheme for Distributed Sensor Networks," in Proceedings of the 9th ACM conference on Computer and communications security, Washington, DC, USA, November 18-22 2002, pp. 41-47.
Non-Patent Document 2: W. Du, J. Deng, Y. S. Han, S. Chen and P. K. Varshney, "A Key Management Scheme for Wireless Sensor Networks Using Deployment Knowledge," the IEEE INFOCOM 2004, Hong Kong, March 2004.

### Disclosure of the Invention

### Problems to be Solved by the Invention

With respect to initial key storage using location information of nodes, the method disclosed in Non-Patent Document 2 assumes that distribution points be positioned regularly at the node distribution 102 (intervals of nodes are fixed). Consequently, when distribution points are irregularly positioned or multiple distribution methods are used in combination, the conventional method cannot be flexibly applied to irregularly distribution points or multiple distribution methods, which causes a situation where a key necessary for communication with an adjacent node is not stored in the node, so that there is a problem that the efficiency of the network formation 103 is degraded. The present invention is provided to solve, for example, the above problems and mainly aims to securely accomplish the network formation 103 with high probability with less memory even when distribution points are irregular or multiple distribution methods are used in combination.

### Means to Solve the Problems

According to the present invention, a key storage apparatus storing in each node a key which enables encrypted radio communication between distributed nodes when a plurality of nodes which are able to do encrypted radio communication is distributed in a predetermined distribution target area, the key storage apparatus includes:
an area dividing unit for dividing a distribution target area into a predetermined number of sub-areas;
a key assigning unit for assigning a key being different for each sub-area to each of the sub-areas after division by the area dividing unit;
an arrangement sampling unit for predicting an arranged point of a node distributed in the distribution target area using a probability density function of node distribution, selecting one of the sub-areas located within a predetermined range from the arranged point predicted, and specifying a key assigned to the sub-area selected as a key to be stored; and
a key writing unit for writing the key specified by the arrangement sampling unit in the node.

The arrangement sampling unit selects a sub-area from the sub-areas within a radio-communicable range of the node from the arranged point predicted.

The arrangement sampling unit repeats prediction of the arranged point, selection of a specific sub-area within the predetermined range from the arranged point predicted, and specification of the key assigned to the sub-area selected, for one node, until a predetermined multiple number of keys are specified for the one node, and
the key writing unit writes the predetermined multiple number of keys specified by the arrangement sampling unit in the one node.

The arrangement sampling unit is able to predict the arranged point of the node using a probability density function being different for each node.

The key assigning unit assigns multiple number of keys being different for each sub-area to each sub-area after division by the area dividing unit, and
the arrangement sampling unit selects a key from the multiple number of keys assigned to the sub-area selected and specifies the key selected as the key to be stored.

The key storage apparatus is movable by being mounted on a moving object, and further includes:
a position obtaining unit for obtaining information of a current position of the key storage apparatus;
a velocity obtaining unit for obtaining information of a moving velocity of the key storage apparatus;
a node distributing unit for distributing nodes in which the keys are written by the key writing unit; and
a probability density function estimating unit for computing a position and a velocity vector of the key storage apparatus at a predetermined timing using the information of the current position obtained by the position obtaining unit and the information of the moving velocity obtained by the velocity obtaining unit and estimating a probability density function for a case when node distribution is done at the predetermined timing,
the arrangement sampling unit specifies a node-to-be-distributed to be distributed at the predetermined timing, predicts the arranged point of the node-to-be-distributed for a case when the node-to-be-distributed is distributed within the distribution target area using the probability density function estimated by the probability density function estimating unit, selects a sub-area from the sub-areas located within a predetermined range from the arranged point predicted, and specifies a key which is assigned to the sub-area selected as a key to be stored in the node-to-be-distributed,
the key writing unit writes the key specified by the arrangement sampling unit in the node-to-be-distributed, and
the node distributing unit distributes the node-to-be-distributed in which the key is written by the key writing unit at the predetermined timing.

The arrangement sampling unit repeats prediction of the arranged point, selection of the sub-area located within the predetermined range from the arranged point predicted, and specification of the key assigned to the sub-area selected, for the node-to-be-distributed, until a predetermined multiple number of keys are specified for the node-to-be-distributed, and
the key writing unit writes the predetermined multiple number of keys specified by the arrangement sampling unit in the node-to-be-distributed.

According to the present invention, a key storage method storing in each node a key which enables encrypted radio communication between distributed nodes when a plurality of nodes which are able to do encrypted radio communication is distributed in a predetermined distribution target area, the key storage method includes:
an area dividing step for dividing a distribution target area into a predetermined number of sub-areas;
a key assigning step for assigning a key being different for each sub-area to each of the sub-areas after division by the area dividing step;
an arrangement sampling step for predicting an arranged point of a node distributed in the distribution target area using a probability density function of node distribution, selecting one of the sub-areas located within a predetermined range from the arranged point predicted, and specifying a key assigned to the sub-area selected as a key to be stored; and
a key writing step for writing the key specified by the arrangement sampling step in the node.

According to the present invention, a program having a computer store in each node a key which enables encrypted radio communication between distributed nodes when a plurality of nodes which are able to do encrypted radio communication is distributed in a predetermined distribution target area, the program has the computer execute:
an area dividing process for dividing a distribution target area into a predetermined number of sub-areas;
a key assigning process for assigning a key being different for each sub-area to each of the sub-areas after division by the area dividing process;
an arrangement sampling process for predicting an arranged point of a node distributed in the distribution target area using a probability density function of node distribution, selecting one of the sub-areas located within a predetermined range from the arranged point predicted, and specifying a key assigned to the sub-area selected as a key to be stored; and
a key writing process for writing the key specified by the arrangement sampling process in the node.

### Effect of the Invention

According to the present invention, it is possible to predict accurately an arranged point of each node based on a probability density function even when the node arrangement is irregular or multiple distribution methods are used in combination, and it is also possible to specify and store a key necessary for each node based on the arranged point predicted, which enables to securely accomplish network formation with high probability with less memory.

### Preferred Embodiments for Carrying out the Invention

### Embodiment 1.

First, contents of the present embodiment will be outlined.

In this embodiment, the earth surface of an area which becomes distribution target of nodes is divided into minute regions and a key is assigned to each region on computer. Next, node arrangement after distribution is predicted from probability distribution (probability density function) that has been specified previously, a key assigned to a position within a predetermined distance from the predicted position is stored in the node. The above process is repeated by the number of times equal to the number of necessary keys, and the key storage in one node is completed. Then, the same process is carried out on each node, and a whole process is completed.

The main feature of the present embodiment is that a key to be stored in the node is specified by a position where the node is predicted to be distributed and by a key which is previously assigned to the position on a computer. By this, probability that two nodes which are predicted to be distributed close to each other can do secure communication is increased, which makes the network formation 103 efficient. Hereinafter, an initial key storage apparatus related to the present embodiment will be explained in detail.

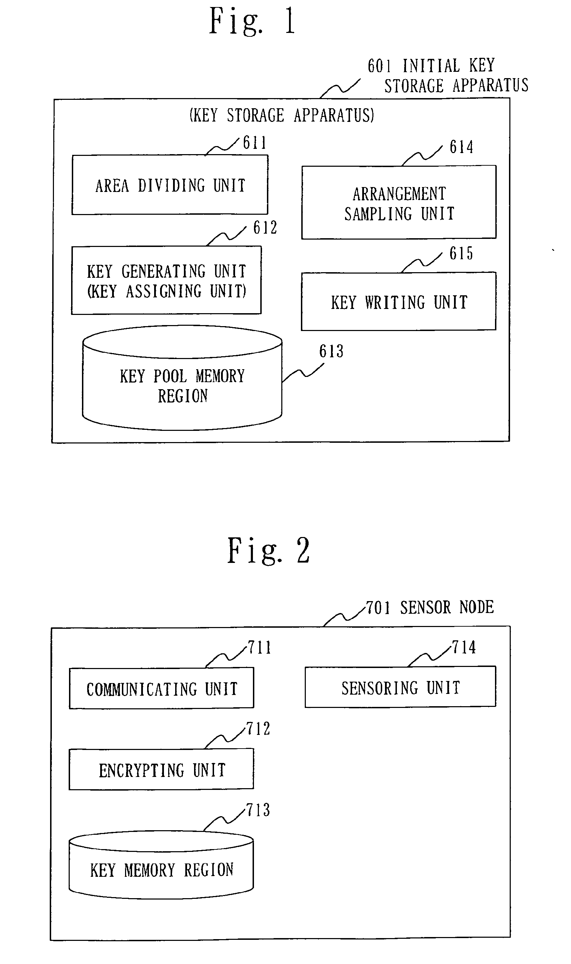

Fig. 1 shows a configuration example of an initial key storage apparatus (a key storage apparatus) in the system (Fig. 15) in which a large number of nodes is distributed in a certain area for collecting sensing information by forming a network with the nodes.

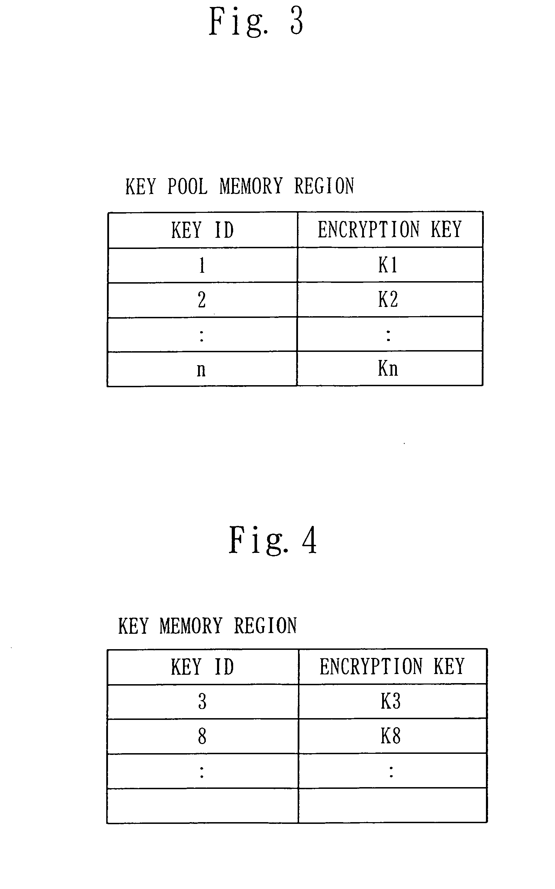

In Fig. 1, an area dividing unit 611 is means to divide a node distribution target space (a node distribution target area) into some sub-spaces (sub-areas), which can be implemented by an information processing apparatus such as a personal computer. A key generating unit (a key assigning unit) 612 is means to generate a key for common key encryption and make correspondence the generated key to the sub-space of the node distribution target space, which can be implemented by an information processing apparatus such as a personal computer. A key pool memory region 613 is data memory means to store the generated key by the key generating unit 612 by relating with a key ID. Fig. 3 shows an example of data stored by the key pool memory region 613.

An arrangement sampling unit 614 is means to sample arranged points of nodes based on a probability density function of the arrangement, which can be implemented by an information processing apparatus such as a personal computer. One of the features of the present embodiment is to include the arrangement sampling unit 614, which enables to predict arranged points of nodes, so that an arbitrary method can be used at the node distribution 102.

A key writing unit 615 is means to read a key corresponding to an output of the arrangement sampling unit 614 from the key pool memory region 613 and store the key in a key memory region 713 of a sensor node 701.

Fig. 2 is a block diagram showing a configuration example of the sensor node used in this embodiment.

In Fig. 2, a communicating unit 711 is means to carry out radio communication with another node. An encrypting unit 712 is means to carry out encryption or decryption of a common key encryption. A key memory region 713 is data memory means to store a key supplied by the key writing unit 615 of the initial key storage apparatus 601 by relating to the key ID.

Fig. 4 shows an example of data stored by the key memory region 713. A sensoring unit 714 is means to collect communication target data.

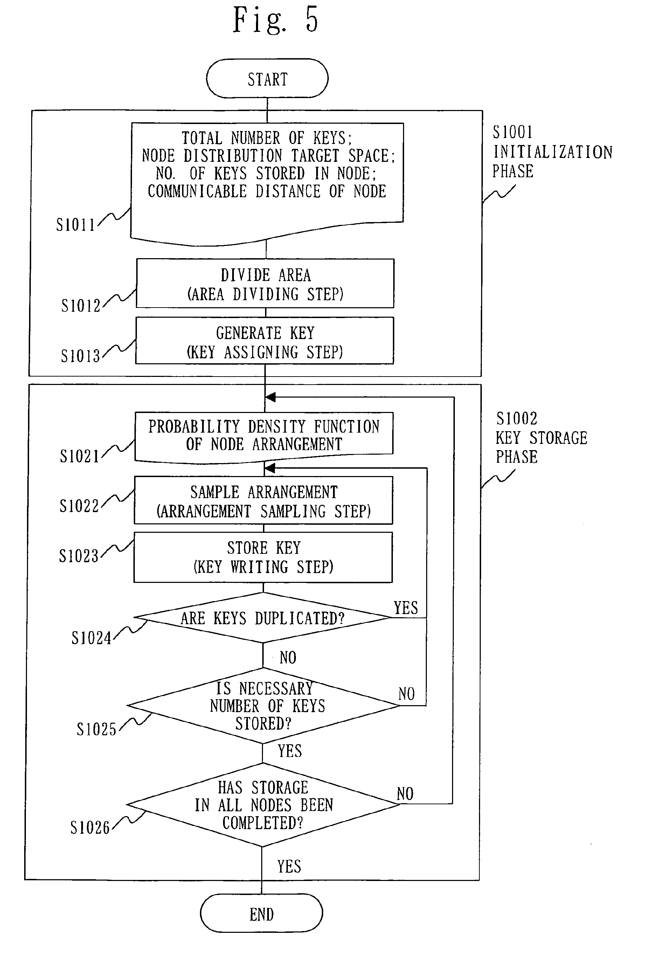

Fig. 5 is a flowchart for explaining an initial key storing process according to the present embodiment.

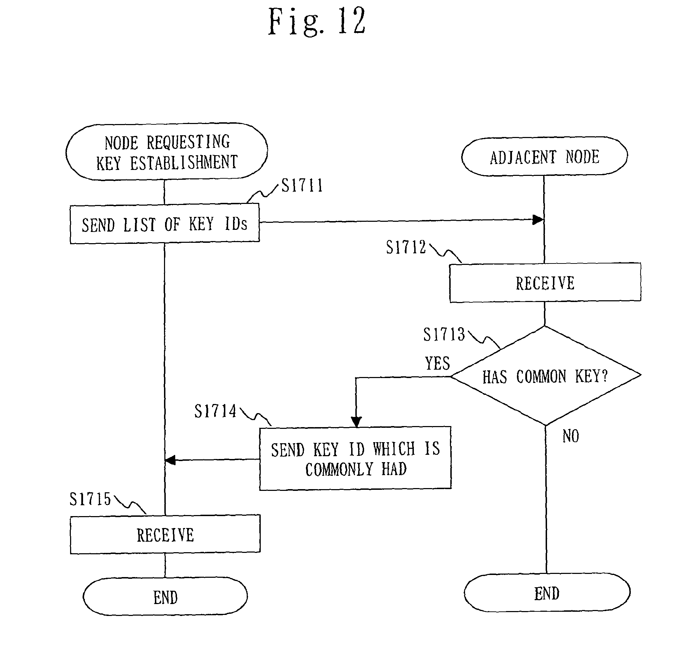

Fig. 12 is a flowchart for explaining a key establishment process between nodes.

In the following, the operation will be explained by referring to the flowchart of Fig. 5.

First, an initialization phase of the initial key storage apparatus 601 is implemented (step S1001). Inputs at the initialization phase are the total number of keys (n), node distribution target space (A), the number of keys to be stored in a node (m), and a communicable distance of a node (r) (step S1011). In this embodiment, A is assumed to be two-dimensional space; however, it can be easily applied to a case where A is three-dimensional space.

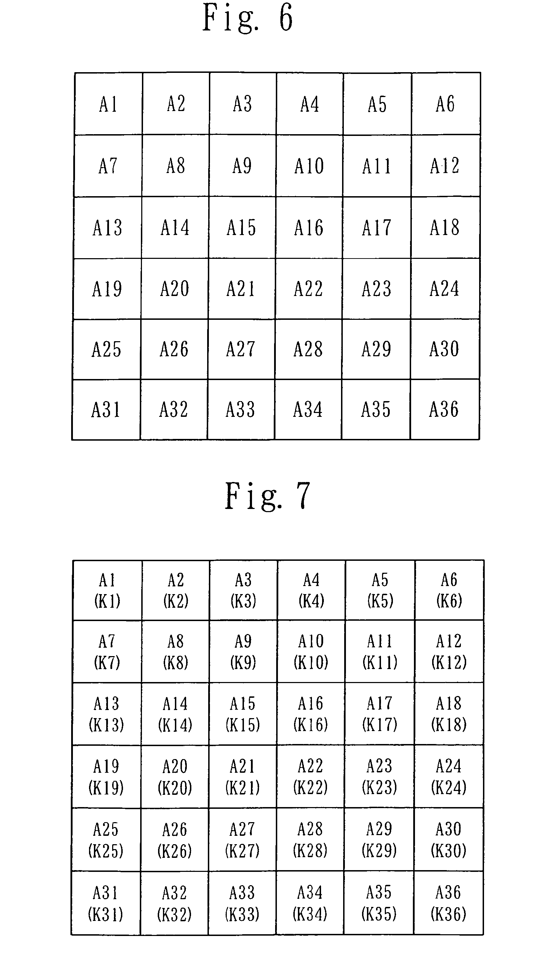

The area dividing unit 611 divides the node distribution target space A into n sub-spaces (A1 through An) having identical sizes (an area dividing step)(step S1012). Fig. 6 is an imaginary drawing showing result of the area division. In this example, it is assumed that a square is used for the sub-space; however, it is not limited to the square but anything which the node distribution target space A is covered with and which has a shape preferably resembling a circle. For example, it can be a rectangle or a regular hexagon, etc.

The key generating unit 612 generates n keys, makes a pair of a key ID (1 through n) and an encryption key (K1 through Kn) to store in the key pool memory region 613 (a key assigning step) (step S 1013). The generated keys K1 through Kn respectively correspond to the sub-spaces A 1 through An divided at step S 1012. Namely, each key Ki is assigned to each sub-space Ai. Fig. 7 is an imaginary drawing showing that each key is assigned to each sub-space.

After the above initialization phase is finished, a key storage phase is implemented to each sensor node 701 (step S1002). An input at the key storage phase is a probability density function (Pr(x,y)) of an arrangement of a node (Nj) (step S1021). In particular, when it is assumed that the distribution is two-dimensional normal distribution, an average (a center position of the distribution = a distribution point), a standard deviation, and a correlation coefficient can be used as an input. Further, when a standard deviation and a correlation coefficient are fixed values for all nodes, it is enough to input only the average (a distribution point).

On the other hand, an input at the key storage phase (step S502) in the conventional method is a node distribution target area (step S521), and the key storage is carried out under the same condition for all nodes distributed in the same area. In the present embodiment, it is possible to change condition (a probability density function) for each node, and therefore it is applicable to an arbitrary distribution method.

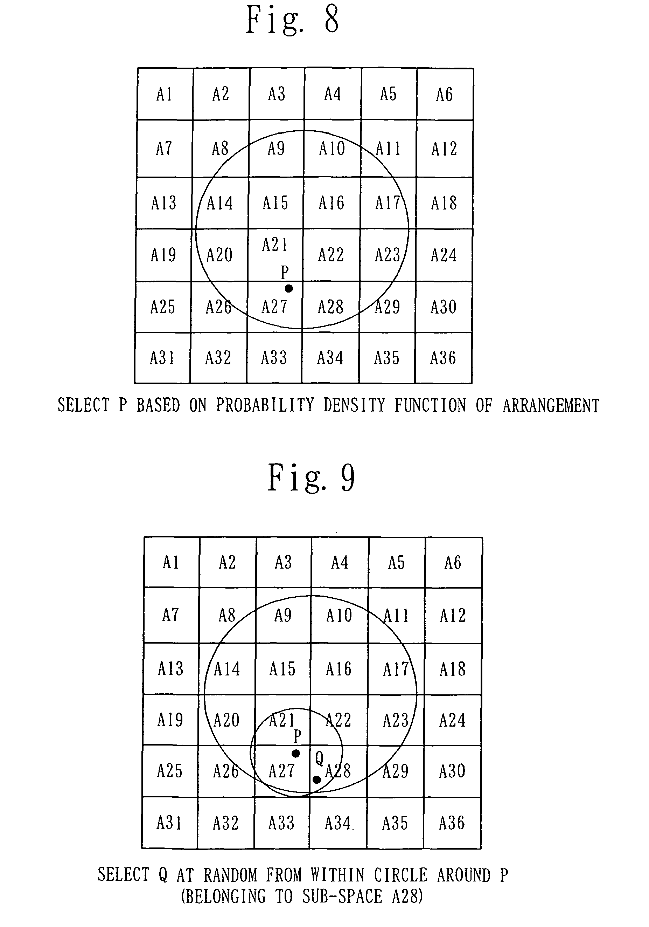

Based on a probability density function Pr(x,y), the arrangement sampling unit 614 selects one node arranged point P inside the node distribution target space A, further selects at random one point Q within a circle having a radius r around P (corresponding to a communicable region from P), and decides a sub-space Ai which Q belongs to (an arrangement sampling step) (step S1022). Fig. 8 is an imaginary drawing for selecting the point P and Fig. 9 is for the point Q. Large circles in Figs. 8 and 9 show regions to which the node is distributed, and P is an arranged point of a certain node predicted by sampling based on the probability density function. A small circle in Fig. 9 shows a communicable region from P, and Q is a point selected at random from the small circle. Further, the arrangement sampling unit, in the example of Fig. 9, specifies a key K28 corresponding to a sub-space A28 as an object to be written in a node which is predicted to be arranged at the point P.

According to the specification by the arrangement sampling, the key writing unit 615 reads an encryption key Ki corresponding to the sub-space Ai from the key pool memory region 613, and stores the key ID (i) and the encryption key (Ki) in the key memory region 713 of the node Nj (a key writing step) (step S1023). Here, if the keys are duplicated, the operation is restarted from sampling of the arrangement (step S 1024). The above arrangement sampling and the key storage (steps S 1022 through S 1024) are repeated until m keys are stored in the key memory region 713 of the node Nj (step S1025), and the key storage in one node is finished.

The above key storage is repeated individually by the number of times equal to the number of nodes (step S 1026), and when the key storage in all nodes is completed, the key storage phase is finished.

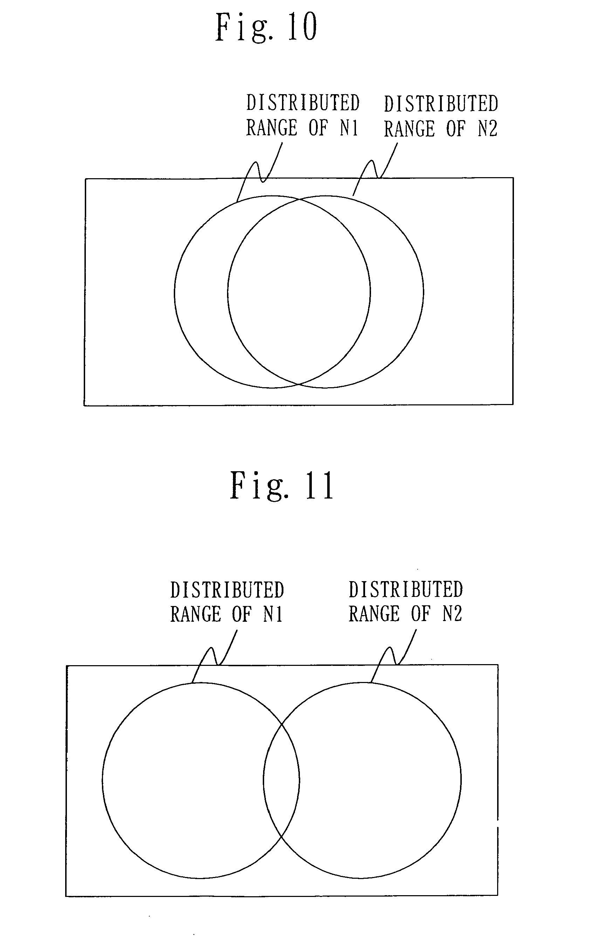

Figs. 10 and 11 are imaginary drawings for explaining the key storage in certain two nodes (assumed to be a node N1 and a node N2). In Figs. 10 and 11, a left circle shows a region at which the node N1 is predicted to be arranged, and a right circle shows a region at which the node N2 is predicted to be arranged. Further, since the space is made corresponding to the key as shown in Fig. 7, it is considered that each circle corresponds to a set of keys which can be stored in each node. Fig. 10 is an example in which two nodes are predicted to be arranged close to each other. In this case, since a shared part of the sets of keys is large, the probability that the two nodes have common keys to enable secure communication becomes high. On the other hand, Fig. 11 is an example in which two nodes are predicted to be arranged far from each other. In this case, since a shared part of the sets of keys is small, the probability that the two nodes have common keys becomes low. However, since the probability that these nodes are arranged within a communicable range is basically low, it can be said that the necessity of having a common key is low.
Further, by using Q instead of P for deciding the sub-space, it is possible to increase the probability that "two nodes which have probability to be arranged at the same position is 0 but have probability to be arranged within a communicable range" have a common key.

As discussed above, it is possible to use an arbitrary probability density function as an input at the key storage phase, so that the present embodiment is applicable also to a case in which distribution points are irregular. In addition, since a pair of nodes which are predicted to be arranged closely has a common key with high probability, it is possible to implement the network formation 103 efficiently.

After the nodes are distributed according to the probability density function, a procedure of two nodes which are arranged within a communicable range (named as a node requesting key establishment and an adjacent node) to try secure communication will be explained by referring to a flowchart of Fig. 12. The node requesting key establishment broadcasts a list of the key IDs stored in the key memory region 713 to the adjacent node to check if a common key exists using the communicating unit 711 (step S1711). The adjacent node receives this using the communicating unit 711 (step S 1712) and checks if the key memory region 713 of itself includes the same key ID (step S1713). The adjacent node which has confirmed to have the same key Ki sends the key ID i as a response (steps S 1714 through S 1715). Hereinafter, encrypted communication is carried out using the encrypting unit 712 and the key Ki. As described above, the key establishment is done only by sending/receiving the key ID, which ensures security of the subsequent communication.

Here, in the present embodiment, although the node distribution target space is divided into n sub-spaces and one key is made corresponding to each sub-space at step S 1012, it is also possible to decrease the number of dividing the node distribution target space and to implement the step by making corresponding multiple keys to each sub-space. In this case, after deciding a sub-space at step S1022, one key is selected at random from multiple keys which are made corresponding to the sub-space.

Further, in this embodiment, n keys are generated using the key generating unit 612 at step S 1013; alternatively, it is also possible that n keys are generated previously using an exclusive key generator, etc., and the n keys are inputted through a flexible disk, etc. at step S 1011.

Further, in this embodiment, the point Q is selected at random from within the circle having a radius r around P at step S 1022; however, it is also possible that the radius is set to an arbitrary value other than r (r/2 or 2r, for example). The smaller the radius is, the higher the probability becomes that the two nodes which are predicted to be arranged close to each other have a common key, but the lower the probability becomes that the two nodes which are predicted to be arranged far have a common key.

Further, in this embodiment, although the point Q is selected at random from within the circle having the radius r around P at step S 1022, it is also possible to select one point at random from along the circumference instead of within the circle.

Further, in this embodiment, although the point Q is selected at random from within the circle having the radius r around P at step S1022, it is also possible to specify not only a circle but any condition showing a communicable region.

Further, in this embodiment, the operation is restarted from the sampling of the arrangement if keys are duplicated at step S1024; alternatively, it is also possible to store a (unstored) key corresponding to an adjacent sub-space.

### Embodiment 2.

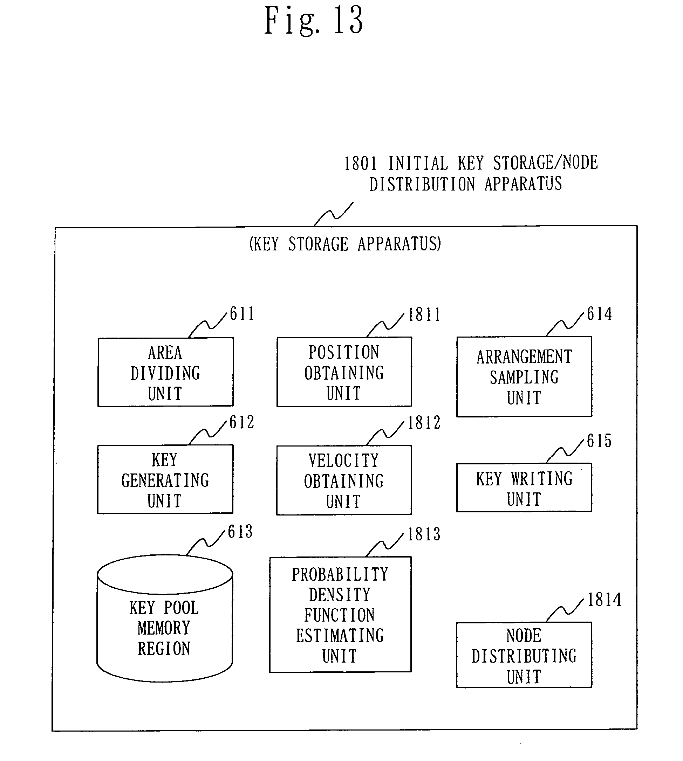

Fig. 13 is a block diagram showing a configuration example of an initial key storage/node distribution apparatus 1801 which includes both functions to store a key in a node and to distribute nodes in a system in which a large number of nodes is distributed in a certain area for collecting sensing information by forming a network with the nodes. Here, the initial key storage/node distribution apparatus 1801 according to the present embodiment is movable by mounting on a moving object such as a helicopter, and the node distribution can be done simultaneously to the moving.

In Fig. 13, an area dividing unit 611, a key generating unit 612, a key pool memory region 613, an arrangement sampling unit 614, and a key writing unit 615 are the same as ones shown in the first embodiment, and their explanation will be omitted.

A position obtaining unit 1811 is means to obtain information of spatial position of the initial key storage/node distribution apparatus 1801, which can be implemented by a positioning system such as a GPS (Global Positioning System), etc.
A velocity obtaining unit 1812 is means to obtain velocity vector information of the initial key storage/node distribution apparatus 1801, which can be implemented by a GPS and a velocity sensor, etc.

A probability density function estimating unit 1813 is means to estimate a probability density function of node arrangement at the time of distribution based on outputs of the position obtaining unit 1811 and the velocity obtaining unit 1812, which can be implemented by an information processing apparatus such as a personal computer. A node distributing unit 1814 is means to release a node in which the key storage is completed.

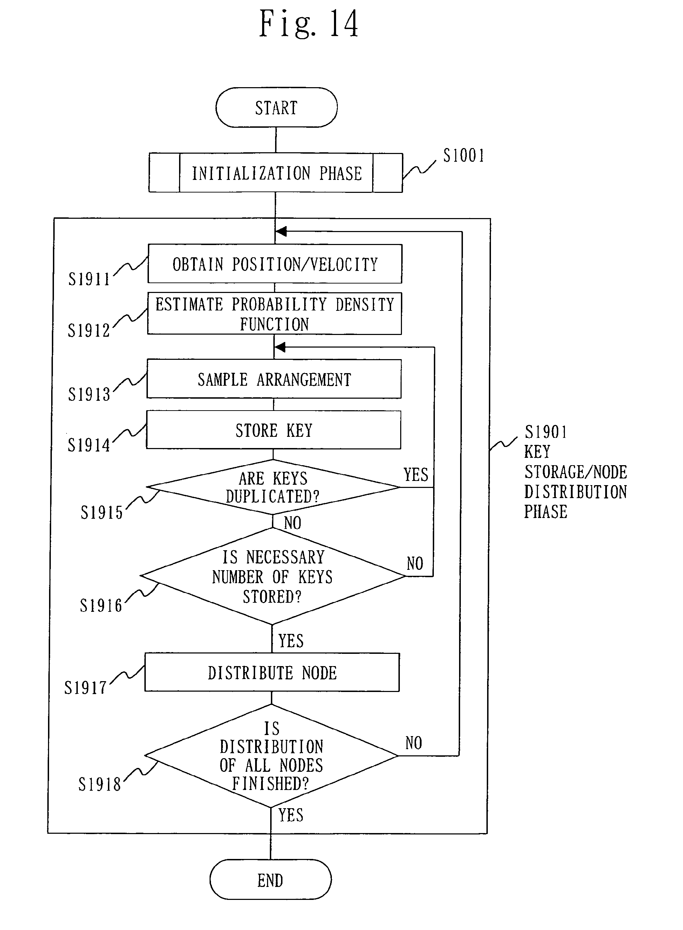

Fig. 14 is a flowchart for explaining initial key storage and node distribution process according to the present embodiment.

In the following, the operation will be explained by referring to the flowchart of Fig. 14.

First, an initialization phase of the initial key storage/node distribution apparatus 1801 is implemented (step S1001). The initialization phase is the same as one shown in the first embodiment, and the explanation will be omitted.

After the initialization phase is finished, a key storage/node distribution phase is implemented for each sensor node 701 (step S1901).

The position obtaining unit 1811 and the velocity obtaining unit 1812 obtain a position and a velocity vector of the initial key storage/node distribution apparatus 1801 at the current time (step S 1911).

Next, the probability density function estimating unit 1813 computes a position and a velocity vector at a time t seconds after using the position and the velocity vector at the current time and estimates a probability density function Pr(x,y) of the node distribution at the time t seconds after (step S1912). Here, t is a value which is determined previously with consideration of the processing speed of the arrangement sampling (step S1913) and the key storage (step S1914), etc.

Next, the arrangement sampling unit 614 carries out arrangement sampling using the probability density function estimated by the probability density function estimating unit 1813, and further the key writing unit 615 carries out key storage according to the specification of the arrangement sampling unit (steps S 1913 through S 1916). These are the same as ones shown in the first embodiment, and the explanation will be omitted.

Then, t seconds after the obtainment of position/velocity (step S 1911), the node distributing unit 1814 carries out node distribution (step S 1917), and the distribution of one node is finished.

The above key storage/node distribution is repeated individually by the number of times equal to the number of nodes (step S 1918), and when all key storage/node distribution is completed, the key storage/node distribution phase is finished.

As discussed above, since a key is decided at real time based on the obtained position and velocity at the key storage/node distribution phase, it is unnecessary to decide previously distribution points, and for example, when the node distribution is done by a helicopter from the air, position adjustment is not required, which enables to reduce the distribution cost.

Various modifications that have been discussed in the first embodiment can be applied also in this embodiment.

Further, in the present embodiment, although the node distribution is done after every completion of key storage in one node at step S 1917, the node distribution can be done after every completion of key storage in multiple nodes.

Further, although the probability density function is estimated based on the position and the velocity of the initial key storage/node distribution apparatus 1801 in the above description, it is also possible to estimate the probability density function using another element, for example, an indicator showing surrounding condition such as a wind velocity, direction of wind, a temperature, humidity, and land features of the distribution target area (a slope, etc.).

In each of the foregoing embodiments, the initial key storage apparatus 601 and the initial key storage/node distribution apparatus 1801 can be implemented by computers.

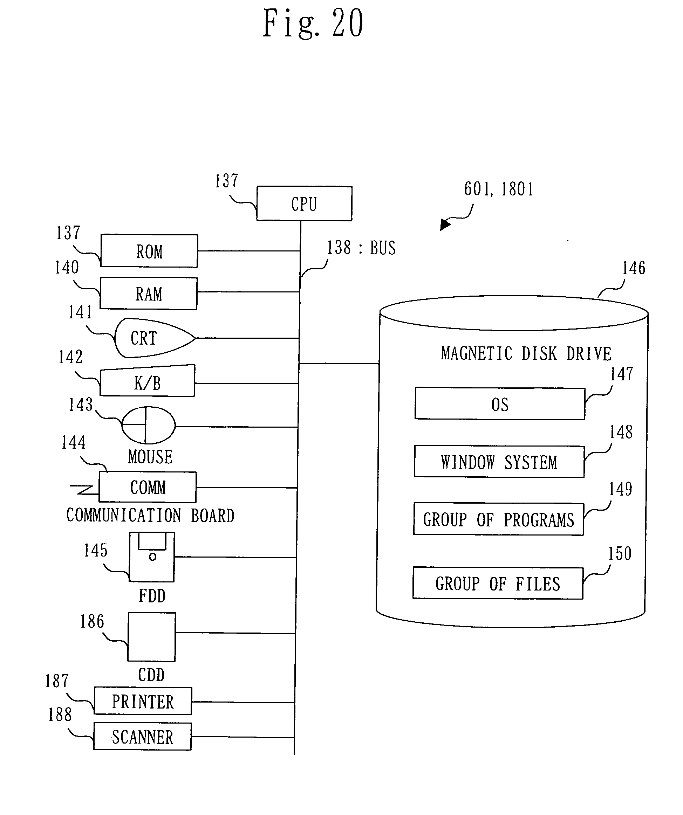

For example, as shown in Fig. 20, the initial key storage apparatus 601 and the initial key storage/node distribution apparatus 1801 include a CPU (Central Processing Unit) 137 that executes programs.

For example, the CPU 137 can be connected via a bus 138 with a ROM (Read Only Memory) 139, a RAM (Random Access Memory) 140, a communication board 144, a CRT displaying unit, a K/B (keyboard) 142, a mouse 143, an FDD (Flexible Disk Drive) 145, a CDD (compact disk drive) 186, a magnetic disk drive 146, an optical disk drive, a printer device 187, a scanner device 188, etc.

The RAM is an example of volatile memories. The ROM, the FDD, the CDD, the magnetic disk drive, the optical disk drive are examples of non-volatile memories. These are examples of memory devices or memory units.

In each of the foregoing embodiments, data or information handled by the initial key storage apparatus 601 and the initial key storage/node distribution apparatus 1801 is stored in a memory device or a memory unit, and recorded and read by each unit of the initial key storage apparatus 601 and the initial key storage/node distribution apparatus 1801.

Further, the communication board is connected to, for example, LAN, the Internet, or WAN (wide area network) such as ISDN, etc.

The magnetic disk drive stores an operating system (OS), a window system, a group of programs, and a group of files (database).

The group of programs are executed by the CPU, the OS, and the window system.

A part or all of each element of the initial key storage apparatus 601 and the initial key storage/node distribution apparatus 1801 can be configured by programs that is executable by computers. Or it is also possible to implement by firmware stored in a ROM. Or it is also possible to implement by software, by hardware, or a combination of software, hardware, and firmware.

The above group of programs store programs to have a CPU execute processes that have been explained as "-- unit" in the explanation of the embodiments. These programs are composed using computer languages such as C language or Java (registered trademark), for example.

Further, the above programs are stored in recording medium such as a magnetic disk drive, an FD (Flexible Disk), an optical disk, a CD (Compact Disk), an MD (Mini Disk), a DVD (Digital Versatile Disk), etc. and read and executed by a CPU.

### Brief Explanation of the Drawings

[Fig. 1] Fig. 1 shows a configuration example of an initial key storage apparatus according to the first embodiment.
[Fig. 2] Fig. 2 shows a configuration example of a sensor node according to the first embodiment.
[Fig. 3] Fig. 3 shows an example of a key pool memory region of the initial key storage apparatus according to the first embodiment.
[Fig. 4] Fig. 4 shows an example of a key memory region of the initial key storage apparatus according to the first embodiment.
[Fig. 5] Fig. 5 is a flowchart showing a processing example of the initial key storage apparatus according to the first embodiment.
[Fig. 6] Fig. 6 is an imaginary drawing showing result of area division in the initial key storage apparatus according to the first embodiment.
[Fig. 7] Fig. 7 is an imaginary drawing showing result of key assignment in the initial key storage apparatus according to the first embodiment.
[Fig. 8] Fig. 8 explains an example of arrangement sampling in the initial key storage apparatus according to the first embodiment.
[Fig. 9] Fig. 9 explains an example of arrangement sampling in the initial key storage apparatus according to the first embodiment.
[Fig. 10] Fig. 10 explains relationship between an arranged point of a node and key storage.
[Fig. 11] Fig. 11 explains relationship between an arranged point of a node and key storage.
[Fig. 12] Fig. 12 is a flowchart showing a processing example of a sensor node according to the first embodiment.
[Fig. 13] Fig. 13 shows a configuration example of an initial key storage/node distribution apparatus according to the second embodiment.
[Fig. 14] Fig. 14 is a flowchart showing a processing example of the initial key storage/node distribution apparatus according to the second embodiment.
[Fig. 15] Fig. 15 shows a procedure of node creation, node distribution, and network formation.

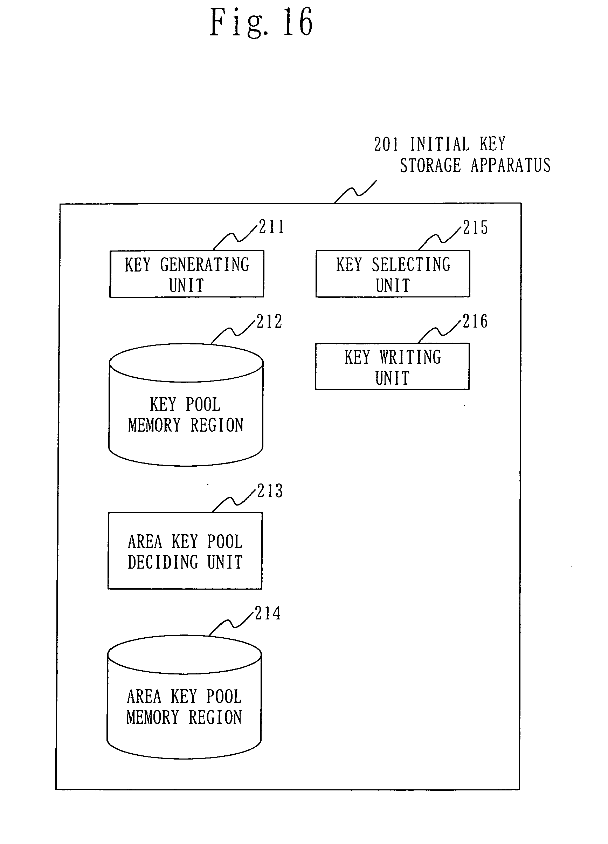

[Fig. 16] Fig. 16 shows a configuration example of a conventional initial key storage apparatus.

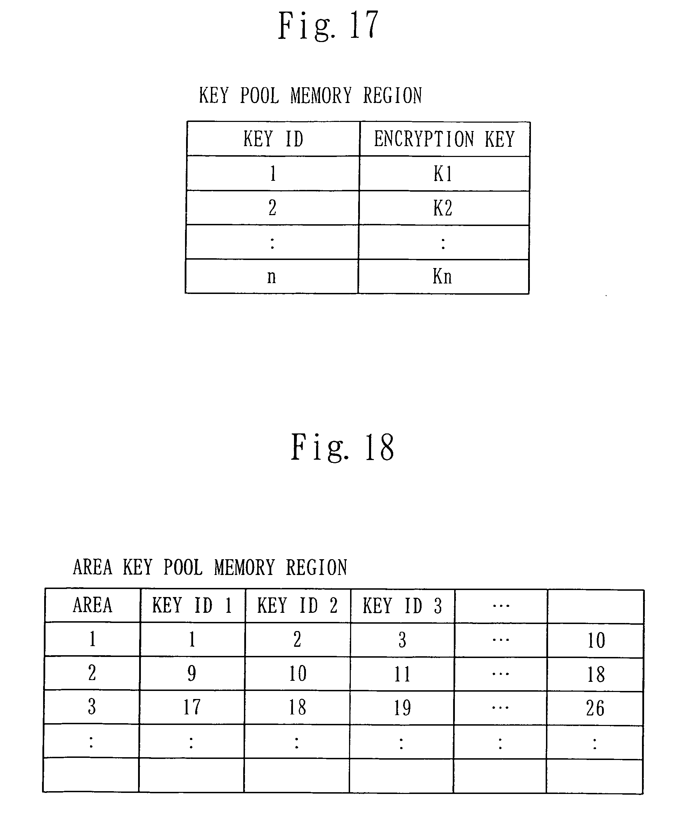

[Fig. 17] Fig. 17 shows an example of a key pool memory region of the conventional initial key storage apparatus.
[Fig. 18] Fig. 18 shows an example of an area key pool memory region of the conventional initial key storage apparatus.

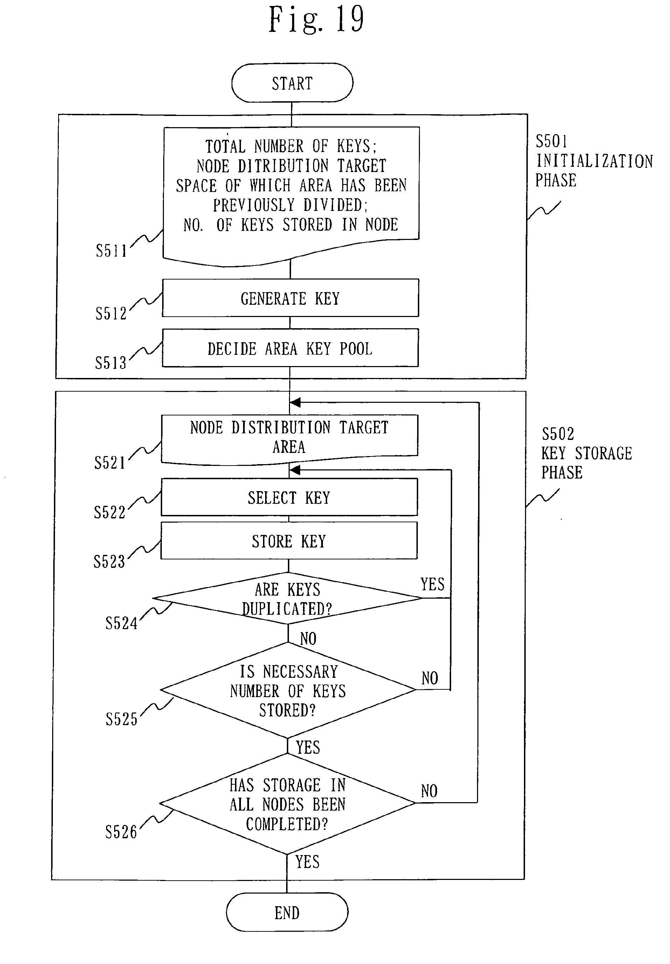

[Fig. 19] Fig. 19 is a flowchart showing a processing example of the conventional initial key storage apparatus.
[Fig. 20] Fig. 20 shows an example of hardware configuration of the initial key storage apparatus and the initial key storage/node distribution apparatus.

### Explanation of Signs

601: an initial key storage apparatus; 611: an area dividing unit; 612: a key generating unit; 613: a key pool memory region; 614: an arrangement sampling unit; 615: a key writing unit; 701: a sensor node; 711: a communicating unit; 712: an encrypting unit; 713: a key memory region; 714: a sensoring unit; 1801: an initial key storage/node distribution apparatus; 1811: a position obtaining unit; 1812: a velocity obtaining unit; 1813: a probability density function estimating unit; and 1814: a node distributing unit.

## Claims

1. A key storage apparatus storing in each node a key which enables encrypted radio communication between distributed nodes when a plurality of nodes which are able to do encrypted radio communication is distributed in a predetermined distribution target area, the key storage apparatus comprising:
an area dividing unit for dividing a distribution target area into a predetermined number of sub-areas;
a key assigning unit for assigning a key being different for each sub-area to each of the sub-areas after division by the area dividing unit;
an arrangement sampling unit for predicting an arranged point of a node distributed in the distribution target area using a probability density function of node distribution, selecting one of the sub-areas located within a predetermined range from the arranged point predicted, and specifying a key assigned to the sub-area selected as a key to be stored; and
a key writing unit for writing the key specified by the arrangement sampling unit in the node.

2. The key storage apparatus of claim 1,
wherein the arrangement sampling unit selects a sub-area from the sub-areas within a radio-communicable range of the node from the arranged point predicted.

3. The key storage apparatus of claim 1,
wherein the arrangement sampling unit repeats prediction of the arranged point, selection of a specific sub-area within the predetermined range from the arranged point predicted, and specification of the key assigned to the sub-area selected, for one node, until a predetermined multiple number of keys are specified for the one node, and
wherein the key writing unit writes the predetermined multiple number of keys specified by the arrangement sampling unit in the one node.

4. The key storage apparatus of claim 1,
wherein the arrangement sampling unit is able to predict the arranged point of the node using a probability density function being different for each node.

5. The key storage apparatus of claim 1,
wherein the key assigning unit assigns multiple number of keys being different for each sub-area to each sub-area after division by the area dividing unit, and
wherein the arrangement sampling unit selects a key from the multiple number of keys assigned to the sub-area selected and specifies the key selected as the key to be stored.

6. The key storage apparatus of claim 1,
wherein the key storage apparatus is movable by being mounted on a moving object, and further comprises:
a position obtaining unit for obtaining information of a current position of the key storage apparatus;
a velocity obtaining unit for obtaining information of a moving velocity of the key storage apparatus;
a node distributing unit for distributing nodes in which the keys are written by the key writing unit; and
a probability density function estimating unit for computing a position and a velocity vector of the key storage apparatus at a predetermined timing using the information of the current position obtained by the position obtaining unit and the information of the moving velocity obtained by the velocity obtaining unit and estimating a probability density function for a case when node distribution is done at the predetermined timing,
wherein the arrangement sampling unit specifies a node-to-be-distributed to be distributed at the predetermined timing, predicts the arranged point of the node-to-be-distributed for a case when the node-to-be-distributed is distributed within the distribution target area using the probability density function estimated by the probability density function estimating unit, selects a sub-area from the sub-areas located within a predetermined range from the arranged point predicted, and specifies a key which is assigned to the sub-area selected as a key to be stored in the node-to-be-distributed,
wherein the key writing unit writes the key specified by the arrangement sampling unit in the node-to-be-distributed, and
wherein the node distributing unit distributes the node-to-be-distributed in which the key is written by the key writing unit at the predetermined timing.

7. The key storage apparatus of claim 6,
wherein the arrangement sampling unit repeats prediction of the arranged point, selection of the sub-area located within the predetermined range from the arranged point predicted, and specification of the key assigned to the sub-area selected, for the node-to-be-distributed, until a predetermined multiple number of keys are specified for the node-to-be-distributed, and
wherein the key writing unit writes the predetermined multiple number of keys specified by the arrangement sampling unit in the node-to-be-distributed.

8. A key storage method storing in each node a key which enables encrypted radio communication between distributed nodes when a plurality of nodes which are able to do encrypted radio communication is distributed in a predetermined distribution target area, the key storage method comprising:
an area dividing step for dividing a distribution target area into a predetermined number of sub-areas;
a key assigning step for assigning a key being different for each sub-area to each of the sub-areas after division by the area dividing step;
an arrangement sampling step for predicting an arranged point of a node distributed in the distribution target area using a probability density function of node distribution, selecting one of the sub-areas located within a predetermined range from the arranged point predicted, and specifying a key assigned to the sub-area selected as a key to be stored; and
a key writing step for writing the key specified by the arrangement sampling step in the node.

9. A program having a computer store in each node a key which enables encrypted radio communication between distributed nodes when a plurality of nodes which are able to do encrypted radio communication is distributed in a predetermined distribution target area, the program having the computer execute:
an area dividing process for dividing a distribution target area into a predetermined number of sub-areas;
a key assigning process for assigning a key being different for each sub-area to each of the sub-areas after division by the area dividing process;
an arrangement sampling process for predicting an arranged point of a node distributed in the distribution target area using a probability density function of node distribution, selecting one of the sub-areas located within a predetermined range from the arranged point predicted, and specifying a key assigned to the sub-area selected as a key to be stored; and
a key writing process for writing the key specified by the arrangement sampling process in the node.
